# EUROPEAN PATENT APPLICATION

(11) **EP 2 609 983 A1**
(43) Date of publication of application: **03.07.2013**
(21) Application number: 11380107.0
(22) Date of filing: 29.12.2011
(51) Int. Cl.: B01D 53/26, F25B 15/00

(54) **Method and system for processing hot humid air resulting from an industrial process,prior to expelling it into the outside air, to recover water and remove the plume**

(71) Applicant: Brunnschweiler S.A., 48100 Mungia, Bizkaia (ES)
(72) Inventor: Löpez Mesas, Luis Oscar, 48100 mungia (BIZKAIA) (ES)
(74) Representative: Urteaga Simarro, José Antonio

(57) **Abstract**

Method and system for processing hot humid air resulting from an industrial process (1), that allows a large amount of water to be recovered from the air and the plume emitted into the environment to be reduced, all with reasonable energy consumption. The method includes at least two successive steps of reducing the air temperature by means of a heat exchanger process (2, 3), in which cooler input water (W₁, W₃) is used and, by heat exchange with the hot air, hotter output water (W₂, W₄) is produced. In an absorption cooling process (7), input heat is used to cool the output water (W₄) from the second heat exchanger process (3), producing the cooler input water (W₃) for the second heat exchanger process (3).

## Description

### Technical field

The invention relates to a method and system for processing hot, humid air resulting from an industrial process, prior to its expulsion into the outside air, in order to recover water from the industrial process and remove the visible plume at the chimney outlet or other outlet of the industrial process.

### Prior art

Certain types of industrial facilities, such as paper drying plants, generate large amounts of very hot humid air, i.e. very hot air loaded with a great mass of water vapour, as waste. This air, usually called "exhaust" air, is emitted directly into the atmosphere, producing some important negative effects.

On the one hand, the water contained in the air in the form of vapour is completely lost in the atmosphere, which means that industrial facilities waste huge amounts of water that could otherwise be reused. Water nowadays is an increasingly more valuable and costly asset and therefore wasting water in this way is becoming unacceptable even in the industrial sector.

On the other hand, the water vapour contained in the air in can sometimes be corrosive and/or contain chemical pollutants, depending on the industrial facility. This means it is very harmful to the environment for all the vapour to be released, without control, into the atmosphere.

Moreover, emitting large amounts of very hot humid air into the atmosphere causes the creation, at the chimney outlet of the industrial facility, of an effect known as the 'plume'. The plume is a very high column of apparent white smoke, which is created as follows: when the very hot humid air comes into contact with the much colder outside air, sudden condensation of the water vapour contained in the air takes place; as a result of this condensation, the air proceeds to contain a very large number of small water droplets in suspension, which agglomerate on tiny particles of dust and other materials present in the humid exhaust air from the process and in the environmental air itself; then, the water droplets refracting rays of sunlight in all directions and wavelengths and producing the white visual effect.

Plumes are undesirable for several reasons: on the one hand, they are unsightly and they are perceived by the population as a sign of pollution because they look like a column of smoke; on the other hand, if the temperature outside the chimney is very low, the drops of water condensed on leaving the chimney and coming into contact with the outside air can freeze, causing the plume to behave like a snow cannon, which might even cause safety problems (poor visibility, accessibility problems, etc.)

Some plume-removing systems are currently known, among which two can be highlighted:
- In a first type of system, condensation and later separation of most of the water contained in the humid exhaust air from the industrial process takes place by using condensers or heat exchangers, wherein a cold fluid (usually, although not exclusively, cold water) cools the humid exhaust air to below its dew point temperature, causing condensation of some of the water contained therein.

The lower the temperature of the water used in the condenser, the more efficient these systems are. Of course, the cheaper the water used, the greater the economy of the process; hence the tendency to use cold water. However, cold water between 10 and 18°C does not in itself guarantee the complete removal of the plume effect, especially in cold climates. Thus, if water between 10 and 18°C is used, the outlet temperature of the saturated humid air (and consequently its dew point) is slightly above 10-18°C, so that in the presence of negative outside temperatures, this air condenses and the water is deposited on small particles of environmental dust or transported by the process air itself, giving rise to the phenomenon of a smaller, but still present, plume. Moreover, using cold water at 10-18ºC usually involves the need for a very large exchange surface in the condenser, given the slight temperature difference intended to be obtained between the water and the humid air to optimize plume removal.
- In other types of systems, the humid exhaust air is mixed with dry external air heated to a temperature usually somewhat higher than the temperature of the humid process air. The mixture or dilution achieved in this way has a humidity content midway between the outside air and the humid process air, thereby reducing its relative humidity and distancing it from saturation conditions. The air mixture so obtained is released directly into the atmosphere after passing through a mixing chamber. This system has the disadvantage of a high energy cost, caused in the process of heating the outside air. Furthermore, plume removal is never sufficiently complete in particularly harsh climates. In addition, the mixing or dilution between the re-heated outside air and the humid air from the process leads to load losses which in some cases are unacceptable for the operation of the equipment that enables extraction of the process air (including a fan whose flow would be reduced to the same extent that process efficiency is reduced).

To solve the issue of the energy cost associated with heating the dry outside air, an air-to-air heat exchanger is sometimes used (or, alternatively, an air-to-water exchanger with an intermediate cooling water circuit to the outside air exchanger), in which the heat of the humid air from the process air is used to heat the dry outside air.

Either of the previously described methods is usually used to remove the plume. However, for colder climates mixed systems are known that combine both methods, first proceeding to condense the humid air with cold (or subcooled) water and later mixing with heated dry outside air.

It is an objective of this invention to provide a system for recovering water from the hot humid air generated as waste in an industrial facility, in order to greatly reduce the amount of water vapour emitted into the atmosphere.

It is also an objective of this invention to provide a system for recovering water from the hot humid air generated as waste in an industrial facility, in which the plume created at the outlet from the industrial process is almost entirely removed.

It is a further objective of this invention to provide a system in which both the water recovery system and the mechanism to remove the plume have low energy consumption so that it can in fact be applied and implemented in industry.

### Brief description of the invention

It is an object of the invention to provide a method and system for processing hot humid air resulting from an industrial process, prior to expelling it into the outside air, which allows a large amount of water to be recovered from the hot humid air without requiring exorbitant energy consumption to achieve this. For this purpose, the method comprises at least two successive steps to reduce air temperature through respective heat exchanger processes. Once the air temperature has been sufficiently reduced, cooler saturated humid air with suspended condensed water is obtained; the suspended condensed water is then extracted, to be recovered for other uses.

In each of the heat exchanger processes a cooler input water is used and, as a result of the heat exchange with the hot air, a warmer output water is produced. In a separate absorption cooling process, an input heat is used to cool the output water from the second heat exchanger process and to obtain the cooler input water for the second heat exchanger process. The heat input for the absorption cooling process can come, for example, from any system, process or point of the industrial process where usable residual heat is available (such as a vacuum system or a cogeneration system).

The use of an absorption cooling process makes it possible to recover huge amounts of water from the hot humid air resulting from the industrial process. This is due to the fact that the absorption machine allows cooled water to be produced at a very low temperature (for instance, between 7 and 12°C) in a viable manner from many points of view: on the one hand, an absorption machine has reasonable energy consumption and dimensions for the degree of water cooling that is needed to be achieved; on the other hand, it is not necessary to feed the absorption machine with external water (for instance, water from the mains supply) as it is supplied, according to the invention, with cooler input water and produces hotter output water, in an approximately or totally closed circuit, requiring a minimal or virtually nonexistent water consumption.

In one particularly advantageous embodiment, the input heat of the absorption cooling process comprises heat from the hot output water from the first heat exchanger process, and this heat is used to cool the output water from the second heat exchanger process and obtain cooler input water for the second heat exchanger process. A great advantage of this embodiment of the invention is that the output water from the first heat exchanger process is cooled as a result of absorption cooling, and this cooler water is reused as input water for the first heat exchanger process. In summary, the heat itself from the air generated by the industrial process is used to heat water which in turn will be used to cool water in an absorption machine, with the first water also being cooled, and with both cooler waters being used, in turn, to cool the air for the industrial process. In this embodiment of the invention, therefore, the heat of the air generated by the industrial process is used to "cool itself", meaning that the method according to the invention operates perfectly without the need for the equipment included in it (especially the absorption machine used in the absorption cooling process) to have a high energy consumption.

Optionally, the invention provides a mechanism to reduce the visibility of the plume, i.e. to reduce the water vapour content of the air expelled into the atmosphere and reduce the possible condensation of the plume, almost entirely or even completely. The mechanism is based on providing heated outside air to the air obtained after extracting suspended water, with the particularity that the heating of the outside air is partly or wholly performed using heat recovered from the hot humid air extracted from the industrial process. This means the system takes advantage of the heat in the hot humid output air from the industrial process to heat outside air.

### Brief description of the drawings

Details of the invention can be seen in the accompanying drawings, which do not seek to restrict the scope of the invention:
- Figure 1 shows a block diagram of a first embodiment of the method according to the invention.
- Figure 2 shows the evolution curve in a Mollier psychrometric diagram of the mass of water vapour contained in the humid air and the temperature of the humid air in the first embodiment.
- Figure 3 shows a block diagram of a second embodiment of the method according to the invention.
- Figure 4 shows the evolution curve in a Mollier psychrometric diagram of the mass of water vapour contained in the humid air and the temperature of the humid air in the second embodiment.
- Figure 5 shows a block diagram of a third embodiment of the method according to the invention.
- Figure 6 shows the evolution curve in a Mollier psychrometric diagram of the mass of water vapour contained in the humid air and the temperature of the humid air in the third embodiment.
- Figure 7 shows a block diagram of a fourth embodiment of the method according to the invention.
- Figure 8 shows the evolution curve in a Mollier psychrometric diagram of the mass of water vapour contained in the humid air and the temperature of the humid air in the fourth embodiment.
- Figure 9 shows a block diagram of a fifth embodiment of the method according to the invention.
- Figure 10 shows the evolution curve in a Mollier psychrometric diagram of the mass of water vapour contained in the humid air and the temperature of the humid air in the fifth embodiment.

### Detailed description of the invention

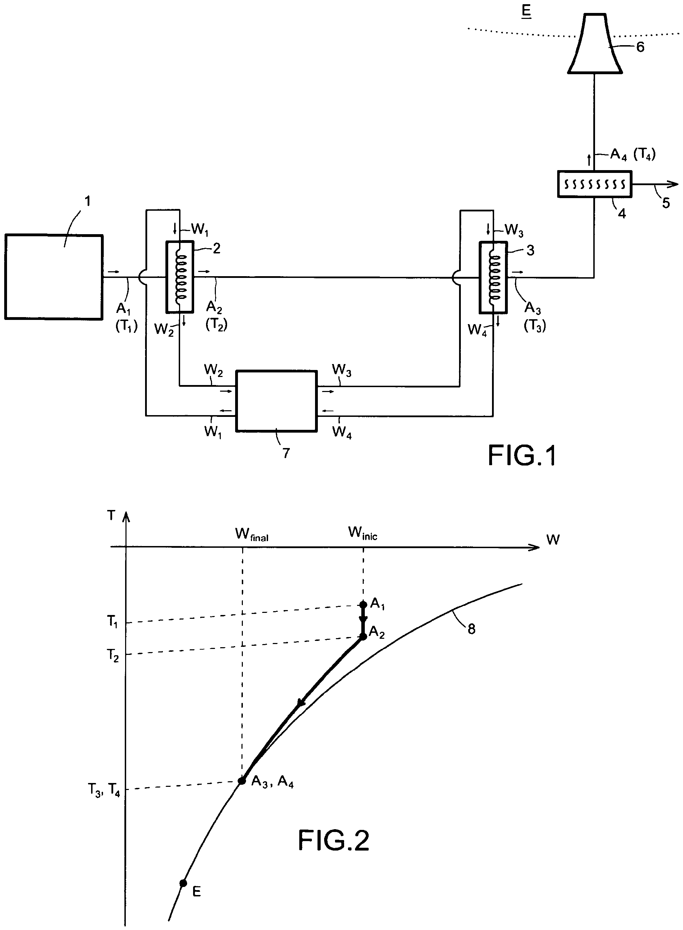

Figure 1 shows a block diagram of a first embodiment of the method according to the invention, applied to an industrial process (1) from which an outlet hot humid air (A₁) at a temperature T₁, generally between 180 and 300ºC, is obtained. The hot humid air (A₁) is processed by the method according to the invention, managing to recover water by means of mechanisms that have a reasonable energy consumption. Recovering water not only allows water to be recycled for other uses and prevents pollutants from being emitted into the atmosphere, but also enables the plume which is visible at the chimneys or other industrial process outlets to be reduced.

According to the invention, the method for processing the hot humid air (A₁) resulting from the industrial process (1), prior to expelling it into the outside air (E), comprises the steps which are detailed below.

Firstly, the temperature of the said air (A₁) is reduced in a first heat exchanger process (2), so that a cooler humid air (A₂) at a temperature T₂ is obtained. T₂ might, for example, be 120°C. In this first heat exchanger process (2), heating of a cooler input water (W₁) also takes place in order to obtain a hotter output water (W₂). For example, the temperature of the cooler input water (W₁) and the hotter output water (W₂) can be 100 and 110°C respectively.

Then, the air (A₂) is cooled down further in a second heat exchanger process (3), so that an even cooler humid air (A₃) at a temperature T₃ is obtained as a result of this second heat exchanger process (3). T₃ might, for example, be 40ºC. The cooler humid air (A₃) contains suspended water. In return, this process produces the heating of a cooler input water (W₃) in order to obtain a hotter output water (W₄).

After the second heat exchanger process (3), at least some of the water suspended in the air (A₃) is extracted by means of a water extractor (4) (for example, a drift eliminator, cyclone separator, settling chamber, etc.). The extracted water has been represented by an arrow (5). This enables some, most or almost all of the water contained in the air (A₃) to be recovered, depending on the input temperature of the hot humid air (A₃), and enables this water to be reused for new purposes. As a result, air (A₄) with a lower suspended water content than the input air (A₃) is also obtained. The temperature T₄ of air (A₄) is generally equal to the previous air temperature T₃. The air (A₄) is directed towards an outlet (6), for example a chimney, an ejector or any other device for extraction into the atmosphere, and only a very small plume is formed due to the very low water vapour content in the air (A₄).

In a fourth step of the method, an absorption cooling process (7) makes of an input heat to cool down the output water (W₄) from the second heat exchanger process (3) in order to obtain the input water (W₃) for the second heat exchanger process (3). In the embodiment shown, the input heat of the absorption cooling process (7) comes from the heat of the output water (W₂) from the first heat exchanger process (2). After the temperature of this water has been reduced, it is used as input water (W₁) for the first heat exchanger process (2).

An absorption cooling process is a process that allows cold to be produced by taking advantage of the fact that certain substances (called 'coolants') absorb heat on changing from a liquid to a gaseous state. To do this, the cooling process is based physically on the ability of a substance called 'absorbent' (for example, lithium bromide) to absorb the coolant (for example, water) when it is in a vapour phase. The main components of an absorption machine, which is the device that performs an absorption cooling process, are: (i) an evaporator, in which the coolant passes from a liquid to a vapour state by absorbing heat from a hot input substance, which, as a result, is cooled; (ii) an absorber, in which the absorbent absorbs the coolant in vapour state, thereby obtaining a concentrated solution in which the absorber is the solute and the coolant is the solvent, and which releases a certain amount of heat with a low energy content; (iii) a generator or heater which, by means of an external heat source, separates the coolant, again in a vapour state, from the absorbent solute, which is returned to the absorber to restart the cycle; (iv) a condenser, which receives the coolant in a vapour state from the generator or heater, and after converting it to a liquid state, delivers it to the evaporator, while also releasing a certain amount of heat.

In the process of the invention, the input heat to the absorption cooling process (7) is preferably used as a heat source specifically for the generator or heater comprised in the absorption cooling process (7), while the output water (W₄) from the second heat exchanger process (3) is used as a heat source for the evaporator comprised in the absorption cooling process (7). This enables maximum use to be made of the excess heat from the industrial process, since the generator or heater (the item that requires the most heat) receives the hottest input, whereas the evaporator receives a heat input that is cooler but still hot enough to operate.

The method of the invention is therefore notably advantageous: the temperature of the hot humid air (A₁) generated by the industrial process (1) is reduced, with the lost heat being used to heat water (W₁) which, in turn, will be used to cool another water (W₄) that will enable the air (A₂) to be cooled even more yet again. This means that the heat from the air itself helps cool the air, according to the invention. This enables the air to be cooled (in order to condense the water and be able to remove it) with optimum energy consumption. In this way, the water recovery and plume reduction system according to the invention entails a reasonable energy consumption that allows the system to be viably implemented.

In an alternative or complementary manner, the input heat to the absorption cooling process (7) may come from other sources. For instance, the input heat may come from other processes, equipment or points in the industrial process (1), such as the following: vacuum systems (systems that dry paper by creating pressure differences that absorb water, which usually require the use of blower units to perform water extraction more effectively, with these blower units generating considerable residual heat); co-generation systems (many industrial processes or facilities comprise co-generation systems normally composed of gas turbines or diesel engines that generate net electricity to be consumed in the industrial process itself, while also generating an important amount of residual heat).

Figure 2 shows the evolution curve for the degree of air humidity (mass of water vapour per amount of dry air mass) and the air temperature of this first embodiment, starting from the initial hot humid air (A₁) and ending with the air (A₄) directed towards the outlet (6). As can be seen in the graph, the process begins with air (A1), provided with a high humidity W_{inic} and a high temperature T₁ (for example, between 180 and 300°C). The air is cooled in the first heat exchanger process (2) and air (A₂) is obtained at a temperature T₂ of, for example, 120ºC, while humidity is preferably kept the same. Air cooling continues in the second heat exchanger process (3), in such a way that the conditions of air (A₃) are reached along a process line that is secant to the condensation curve (8) at the dew point or minimum temperature of the wall on the air side of the cooler. Air (A₃) comprises dry air, water vapour in a concentration W_{final} and suspended liquid water, all at a temperature T₃ of, for example, 40ºC. The liquid water is then extracted; the resulting air (A₄) maintains its temperature (i.e. it leaves at T₄ = T₃) and water vapour content (W_{final}), but contains hardly any suspended liquid water. Finally, this air (A₄) is directed towards the outlet (6).

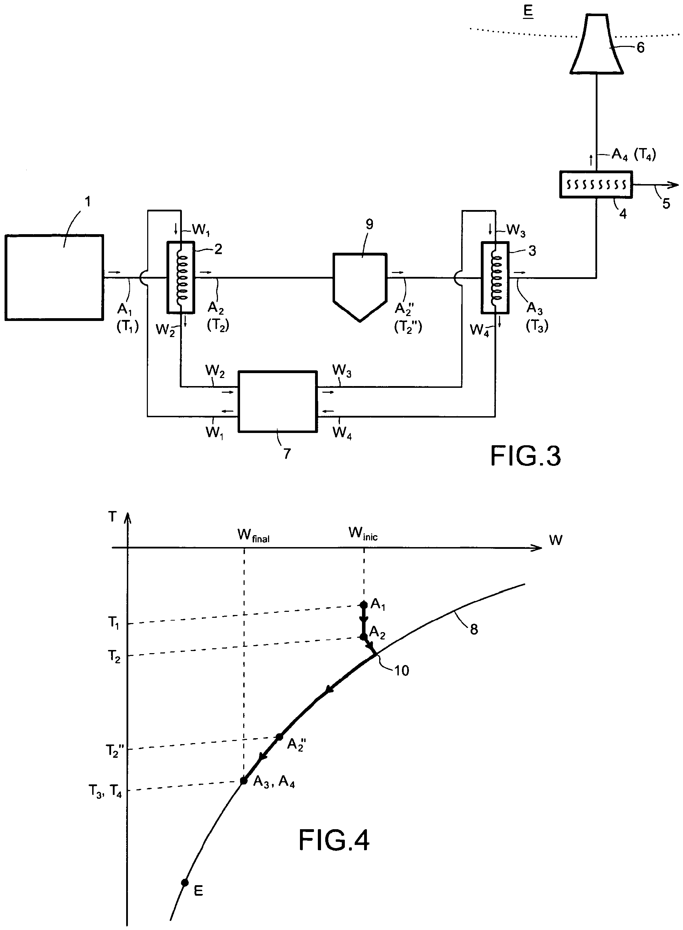

Figure 3 shows a block diagram of a second embodiment of the method according to the invention, in which an additional optional step has been represented. As shown, the method according to the invention optionally includes the additional step of cooling the air (A₂) in a scrubber (9) (a washer, which functions as an air-water exchanger by direct contact between air and water currents), producing an output air (A₂") at a lower temperature T₂". This step is performed between the first heat exchanger process (2) and the second heat exchanger process (3) in order to optimize the performance of the exchange that takes place in the scrubber (9), and is interesting when one wants to take advantage of part of the heat in the air generated by the industrial process (1) to heat water for any specific use. In this case, direct contact heat exchange is one of the most effective and simple kinds, because water vapour that condenses inside the scrubber (9) transfers all its enthalpy to the water to be heated in the scrubber (9). In addition, this step is interesting for the purpose of the invention, as water vapour that condenses inside the scrubber (9) is really added to the water that is to be heated, both in enthalpy and in mass, so that some water recovery takes place in the scrubber (9) (with which more water comes out of the scrubber (9), through its outlet manifold, than enters through its inlet manifold). An additional advantage of having a scrubber (9) (and hence its name, which means 'washer') is that it eliminates many of the solid particles, volatile organic components and other chemical products that the output air from the industrial process (1) might contain.

Figure 4 shows the evolution curve for the mass of water vapour contained in the humid air and the temperature of the humid air in the second embodiment. If this graph is compared with the one in Figure 2, it can be seen that the scrubber (9) or direct air-water exchanger has enabled the final humidity conditions to be reduced at the outlet, by having favoured the removal of humidity from the input air. The hot humid air (A₂) at the inlet to the scrubber (9) firstly undergoes an adiabatic saturation process (almost isentropic, with an evolution curve close to a constant wet bulb temperature line, before reaching saturation -point (10) in the graph-). Once the air is saturated, heat continues to be extracted from it, by which the evolution curve follows the air saturation curve until reaching the output conditions (air (A₂")); the conditions of output air (A₂") generally depend on the water flow to be heated in the scrubber (9), dimensions of the scrubber and the existence or not of an inner fill to increase the time the water to be heated remains inside.

Once the air (A₂"), partially cooled and partially dehumidified, comes out of the scrubber (9), said air (A₂") is made to pass through a second heat exchanger process (3), lowering the humidity and temperature until the conditions of air (A₃) are reached. For this purpose, a process similar to the one already seen in the first embodiment, represented in Figures 1 and 2, is followed.

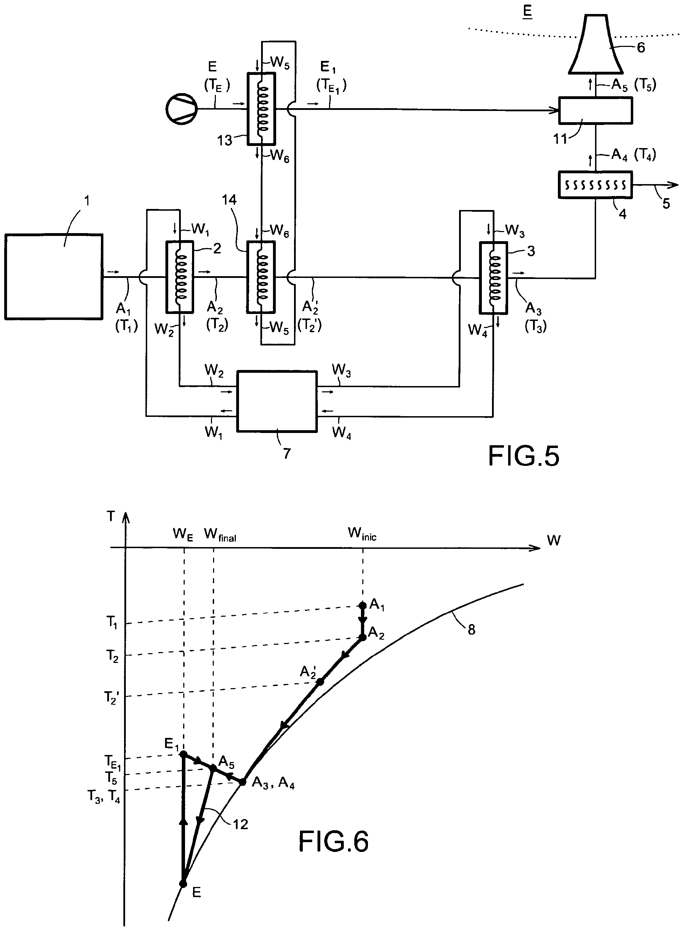

Figure 5 shows a block diagram of a third embodiment of the method according to the invention, which includes optional additional mechanisms to reduce the visibility of the plume generated at the outlet (6) to a still greater extent. More specifically, the method according to the invention comprises, compared to the method represented in Figure 1, the additional steps of: supplying heated outside air (E₁) to the air (A₄) resulting from extracting at least part of the suspended water from the air (A₃), suitably mixing both airs (E₁, A₄) in a mixing process (11), and expelling the mixture of both, represented as A₅, into the outside air (E). According to the invention, the heated outside air (E₁) is heated, at least partly, by means of heat from the hot humid air (A₁) resulting from the industrial process (1), allowing the energy consumption for the outside air heating process and, therefore, for the plume reduction process, to be reduced.

Figure 6, which shows the evolution curve for the mass of water vapour contained in the humid air and the temperature of the humid air in this third embodiment, allows the positive effects achieved by these steps to be understood. When the suspended water has been recovered and the air (A₄) has been obtained, this air (A₄) is mixed with the heated outside air (E₁), whose temperature is usually higher than that of the air (A₄). The mixture (A₅) of both airs is a point that is farther away from the condensation curve. Then, on expelling this mixture (A₅) to the outside, the mixture comes into contact with the outside air (E) and the plume evolves along the evolution line (12) until the plume disappears, i.e. until the outside air point is reached (E). The evolution of the plume takes place in a "safe area", due to the fact that the evolution line (12) is not on the condensation curve (8) but to the left of it, i.e. in humidity/temperature values where there is no condensation risk; as a result, there is no condensation at the plume, making the plume (which is already very small because large amounts of water have been recovered) become invisible.

Optionally, the mixing of heated outside air (E₁) with the air (A₄) obtained after recovering condensed water is carried out as shown in Figure 5. More specifically, outside air (E) is heated in a third heat exchanger process (13) so that heated outside air (E₁) is obtained as an output. In this third heat exchanger process (13), cooling of an input water (W₅) also takes place, producing an output water (W₆) which is cooler than the input water (W₅). Then, in addition, the temperature of the air (A₂) from the industrial process is reduced in a fourth heat exchanger process (14), so that at the outlet from this fourth heat exchanger process (14), cooler humid air (A₂') is obtained; in the same process, heating of the output water (W₆) from the third heat exchanger process (13) also takes place to produce the input water (W₅) for that process. This means that heat from the air generated by the industrial process is used again to make the invention work: in this case it is used to heat water (input water (W₅)), which in turn will be used to heat outside air (E) in order to reduce the visibility of the plume. The position of the air (A₂') can be seen in Figure 6. In the present embodiment, the fourth heat exchanger process (14) is located between the first heat exchanger process (2) and the second heat exchanger process (3).

Alternatively to the use of two heat exchangers processes (13, 14), in another embodiment of the invention, the outside air (E) is heated with an air-to-air exchanger, in which the hot humid air from the industrial process (1) transfers heat to the outside air (E), i.e. the air from the industrial process (1) acts as a hot environment and the outside air (E) that is to be heated acts as a cold environment. This allows the outside air (E) to be heated with a single heat exchanger.

In the embodiment shown, the mixing process (11) is located before the outlet (6) that expels air into the environment; i.e. the mixing process (11) is internal. Nonetheless, this aspect is not relevant for the present invention, and the mixing process (11) may, in practice, be located at different points if applicable.

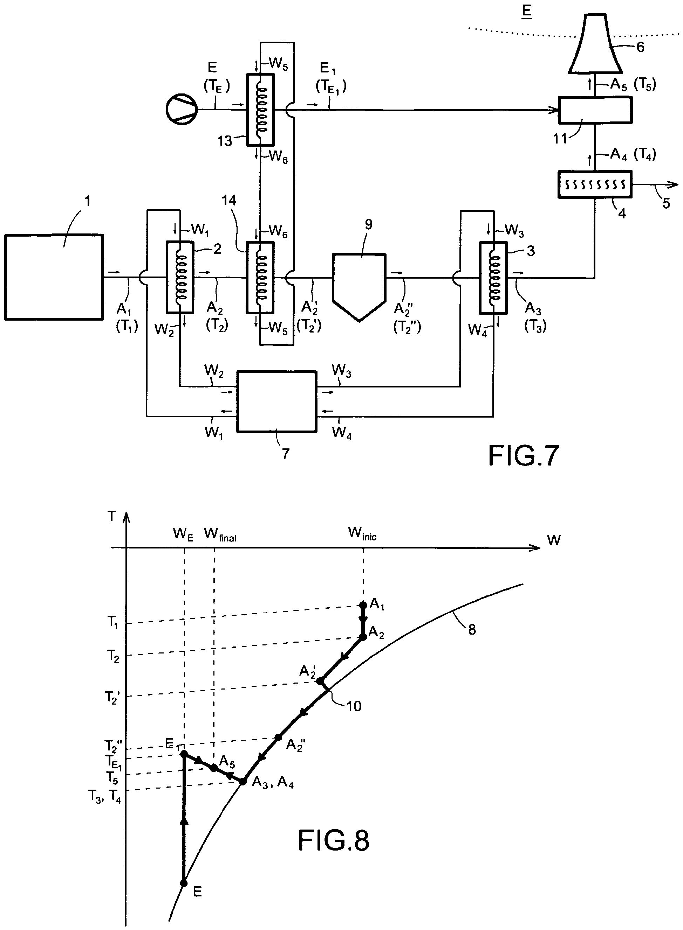

Figure 7 shows a block diagram of a fourth embodiment of the method according to the invention, which simultaneously includes all the optional aspects described so far, i.e. it comprises a scrubber (9) and a mixing process (11) for the heated outside air (E₁), which has been heated by means of two additional heat exchanger processes (13, 14). Having the complete set of processes is the optimum way to simultaneously combine maximum energy recovery at the facility, together with almost total recovery of the water carried in the process air flow and at the same time ensure optimal removal of the plume effect.

Figure 8 shows the evolution curve for the mass of water vapour contained in the humid air and the temperature of the humid air in this fourth embodiment. This evolution curve guarantees maximum depletion of the energy and humidity content in the hot humid air circuit extracted from the process. Moreover, it ensures almost total elimination of the plume for the most adverse climate conditions, i.e. when the ambient air dew point is the lowest possible and the risks of creating condensation and, therefore, a plume, during the mixing that takes place between the extracted air and the ambient air increase, becoming even more critical.

In general, the energy consumption of the unit is reasonable, as already explained. The only items in the system which would normally have to consume energy are the absorption machine associated with the absorption cooling process (7) and the circulating pumps required to ensure water transfer between the heat exchanger that performs the first heat exchanger process (2) and the absorption machine associated with the absorption cooling process (7), between the absorption machine associated with the absorption cooling process (7) and the heat exchanger that performs the second heat exchanger process (3), and between the heat exchangers that perform the third and fourth heat exchanger processes (13, 14), if any.

Each process (2, 3, 7) will usually be performed in its own machine. However, it is possible that the system might include machines capable of performing more than one process claimed by the present invention. For example, an absorption machine might be used that performs both the absorption cooling process (7) and the first heat exchanger process (2), in such a way that it is directly supplied with hot air (A₁) from the industrial process (1).

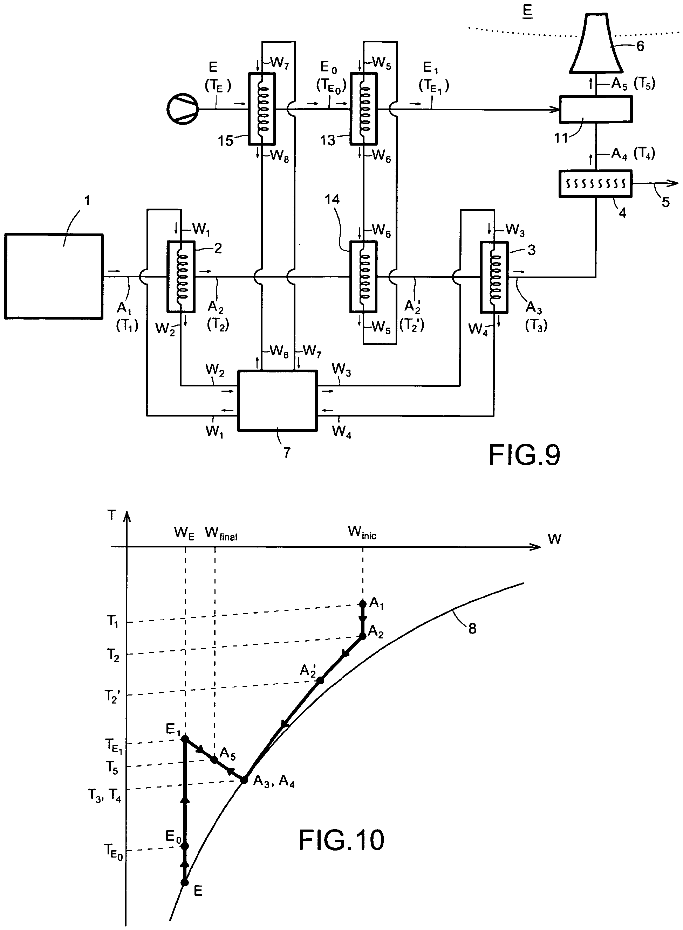

Figure 9 shows a block diagram of a fifth embodiment of the method according to the invention, in which heat generated in the absorption cooling process (7) (preferably in its condenser), is used to heat the outside air (E). Thus, as can be seen, outside air (E) is heated in an additional heat exchanger process (15) in order to obtain heated outside air (E₀), by means of a heat exchange with hot input water (W₇) that produces cooler output water (W₈). This cooler output water (W₈) is then heated taking advantage of the heat provided by the condenser of the absorption cooling process (7), with the hotter input water (W₇) being obtained as a result. This characteristic of the invention makes it possible to achieve even greater energy efficiency in the process and manages to ensure complete removal of plume visibility, even in the harshest climates. Figure 10 shows this intermediate point of heated outside air (E₀) and how the temperature of the heated outside air (E₁) can be higher than in the embodiment shown in Figures 7 and 8 (although in practice it would depend on how both facilities are configured).

Mention has been made in this document of the use of water as an element that is used to exchange energy with air. Water is understood to mean any water-based fluid. This means that fluids such as pure water, water mixed with other agents (antifreeze, corrosion inhibitors, pH correctors, etc.), chemically treated and/or filtered water according to any applicable process, various types of industrial brine, etc. will be considered.

## Claims

1. Method for processing hot humid air (A₁) resulting from an industrial process (1), prior to expelling it into the outside air (E), which is **characterised in that** it comprises the steps of:
- reducing the temperature of said air (A₁) in a first heat exchanger process (2) so that a cooler humid air (A₂) is obtained as an output of said first heat exchanger process (2), where in this process heating of a cooler input water (W₁) also takes place, producing a hotter output water (W₂);
- reducing the temperature of said air (A₂) coming directly or indirectly from the first heat exchanger process (2) in a second heat exchanger process (3), so that a cooler humid air (A₃) with suspended water is obtained as an output of said second heat exchanger process (3), where in this process heating of a cooler input water (W₃) also takes place, producing a hotter output water (W₄);
- extracting at least part of the water suspended in the air (A₃), resulting in an air (A₄) comprising a lower suspended water content, and
- cooling the output water (W₄) from the second heat exchanger process (3), in an absorption cooling process (7), to give rise to the input water (W₃) for this second heat exchanger process (3), for which the absorption cooling process (7) uses an input heat.

2. Method, according to claim 1, which is **characterized in that** the input heat for the absorption cooling process (7) includes heat from the output water (W₂) of the first heat exchanger process (2), whose temperature is then reduced and which is used as input water (W₁) for said first heat exchanger process (2).

3. Method, according to claim 1, which is **characterized in that** the input heat to the absorption cooling process (7) is used as a heat source for a generator or heater of the absorption cooling process (7), while the output water (W₄) from the second heat exchanger process (3) is used as a heat source for an evaporator of said absorption cooling process (7).

4. Method, according to claim 1, which is **characterized in that** the step of cooling the air (A₂) in a scrubber or direct contact air-water exchanger is included between the first heat exchanger process (2) and the second heat exchanger process (3).

5. Method, according to claim 1, which is **characterized in that** it also comprises the steps of:
- supplying heated outside air (E₁) to the air (A₄) resulting after extracting at least part of the water suspended in the air (A₃) and suitably mixing both airs (E₁, A₄), wherein this heated outside air (E₁) has been obtained by heating outside air (E), at least partly, by means of heat from the hot humid air (A₁) resulting from the industrial process (1), and
- expelling the mixture of both into the outside air (E).

6. Method, according to claim 5, which is **characterized in that** it includes the steps of:
- heating outside air (E) in a third heat exchanger process (13), so that heated outside air (E₁) is obtained at the output of said third heat exchanger process (13), where cooling of an input water (W₅) also takes place in said process, producing a cooler output water (W₆), and
- reducing the temperature of the air (A₂) in a fourth heat exchanger process (14), so that a cooler humid air (A₂') is obtained at the output of said fourth heat exchanger process (14), where in this same process, heating of the output water (W₆) from the third heat exchanger process (13) also takes place, producing the input water (W₅) for said process.

7. Method, according to claim 5, which is **characterized in that** it includes the step of heating outside air (E) in an air-to-air exchanger process, in which hot humid air from the industrial process (1) transfers heat to the outside air (E).

8. Method, according to claim 5, in which heat generated in the absorption cooling process (7) is used to heat outside air (E).

9. Method, according to claim 8, in which outside air (E) is heated in an additional heat exchanger process (15) by means of heat exchange with a hot water input (W₇), producing cooler output water (W₈), where the cooler output water (W₈) is heated by heat provided by the absorption cooling process (7), producing the hotter input water (W₇).

10. Method, according to claim 8, wherein heat generated in a condenser of the absorption cooling process (7) is used.

11. System for processing hot humid air (A₁) resulting from an industrial process (1), prior to expelling it into the outside air (E), which is **characterised in that** it comprises:
- a first heat exchanger (2) that, as an input, receives air (A₁) resulting from the industrial process (1) and cooler input water (W₁), and which is capable of generating a cooler humid air (A₂), cooler than the input air (A₁), and hotter output water (W₂), warmer than the input water (W₁), as outputs,
- a second heat exchanger (3) that, as an input, receives air (A₂) that comes directly or indirectly from the outlet of the first heat exchanger (2) and cooler input water (W₃), and which is capable of generating even cooler humid air (A₃) provided with suspended water at its outlet and hotter output water (W₄), which is warmer than the input water (W₃), and
- a water extractor (4), capable of extracting at least part of the suspended water from the air (A₃) and of providing air (A₄) with a lower suspended air content, and
- an absorption cooling machine (7) that, as an input, receives output water (W₄) from the second heat exchanger (3) and which is capable of providing cooler water at its outlet which is used as input water (W₃) for the second heat exchanger (3), making use of an input heat for this purpose.

12. System, according to claim 11, wherein the input heat comprises heat from the output water of the first heat exchanger (2), and wherein the absorption cooling machine (7) is capable of providing cooler water which is used as input water (W₁) for the first heat exchanger (2).

13. System, according to claim 11, where the input heat to the absorption cooling machine (7) is used specifically as a heat source for a generator or heater for the absorption cooling machine (7), while the output water (W₄) from the second heat exchanger process (3) is used as a heat source for an evaporator for the absorption cooling machine (7).

14. System, according to claim 11, also comprising a scrubber (9) or direct contact air-water exchanger between the first heat exchanger (2) and the second heat exchanger (3), in order to cool the air (A₂) from the first heat exchanger (2).

15. System, according to claim 11, also comprising means to heat outside air (E) using heat from the hot humid air (A₁) resulting from the industrial process (1), and to obtain heated outside air (E₁), and means to suitably mix this heated outside air (E₁) with air (A₄) produced after extracting at least part of the suspended water from the air (A₃).

16. System, according to claim 15, which comprises:
- a third heat exchanger (13) that receives, as an input, outside air (E) and input water (W₅), and which is capable of generating, at its outlet, heated outside air (E₁) and cooler output water (W₆), cooler than the input water (W₅);
- a fourth heat exchanger (14) that receives, as an input, air (A₂) that comes directly or indirectly from the first heat exchanger (2) and output water from the third heat exchanger (13), and which is capable of generating, at its outlet, cooler humid air (A₂') and hotter water that is used as input water (W₅) for the third heat exchanger (13).

17. System, according to claim 15, further comprising an air-to-air exchanger, which receives input outside air (E) and hot humid air from the industrial process (1), and which is capable of generating, at its outlet, heated outside air (E₁), heated by means of heat provided from hot humid air from the industrial process (1).

18. System, according to claim 15, where heat generated in the absorption cooling machine (7) is used to heat outside air (E).

19. System, according to claim 18, that includes an additional heat exchanger (15) to heat outside air (E) by means of the heat exchange with hot input water (W₇), producing a cooler output water (W₈), where the cooler output water (W₈) is heated by heat provided by the absorption cooling machine (7), the hotter input water (W₇) being produced as a result.

20. System, according to claim 18, where heat generated in a condenser of the absorption cooling machine (7) is used.
